# EUROPEAN PATENT SPECIFICATION

(11) **EP 2 616 263 B1**
(45) Date of publication and mention of the grant of the patent: **18.06.2014**
(21) Application number: 10770621.0
(22) Date of filing: 17.09.2010
(51) Int. Cl.: B60K 17/14, E02F 9/22, B60K 7/00

(54) **VEHICLE HAVING DRIVING AND STEERING WHEELS ACTUATED BY HYDRAULIC MOTORS**
FAHRZEUG MIT ÜBER HYDRAULIKMOTOREN BETÄTIGTEN ANTRIEBS- UND STEUERRÄDERN
VÉHICULE AYANT DES ROUES MOTRICES ET DIRECTRICES ACTIONNÉES PAR DES MOTEURS HYDRAULIQUES

(43) Date of publication of application: 24.07.2013
(73) Proprietor: Renault Trucks, 69800 Saint Priest (FR)
(72) Inventor: GENTON, David, 01310 Buellas (FR); BERNARD, Denis, F-01340 Etrez (FR)
(74) Representative: Putet, Gilles
(86) International application number: PCT/IB2010/002536
(87) International publication number: WO 2012/035368

(56) References cited:
- DE-A1- 1 922 399
- FR-A1- 2 653 713

## Description

### Field of the invention

The present invention relates to a vehicle having driving and steering wheels actuated by hydraulic motors.

### Technological background

Some vehicles, such as trucks or other heavy vehicles, comprise driving and steering wheels, typically the two front wheels, each of which are actuated by a hydraulic motor arranged with said wheel. The hydraulic motors integrated with those wheels are used to provide additional traction power to the vehicle in certain circumstances, without having to provide a conventional mechanical transmission for transferring the power from the engine to the wheel. FR 2653 713 shows such a vehicle according to the preamble of claim 1.

In such a vehicle, there is provided a hydraulic circuit comprising at least one pump for pressurizing and for carrying a fluid under pressure to actuate the hydraulic motors. The hydraulic circuit forms a hydrostatic transmission. Said hydraulic circuit may include a hydraulic block which is mounted on the vehicle frame and which is hydraulically connected to each of said hydraulic motors by means of flexible hoses.

One weakness of such a conventional hydraulic circuit lies in the fact that the flexible hoses undergo considerable stresses in use. Indeed, when the wheels are steered and when their position vary with respect to the frame due to the fact that they are elastically suspended to the frame, the flexible hoses are bent but may also be twisted around their axis, especially at their end portions where they are connected to the hydraulic block or the hydraulic motors. These repeated deformations, in particular the torsion, may progressively damage the flexible hoses. In addition, the high pressure of the fluid flowing in the flexible hoses further decreases the service life of the flexible hoses and increases the risks for people of failure of said hoses.

Therefore, such a conventional hydraulic circuit can generate relatively high maintenance costs in order to maintain it in an effective and safe state.

It therefore appears that there is room for improvement in vehicles equipped with hydraulic circuits for actuating the driving and steering wheels of said vehicles.

### Summary

It is an object of the present invention to provide an improved vehicle with driving and steering wheels operated by a fluid under pressure which is more robust and has a high safety level.

According to the invention such a vehicle has:
- a frame;
- at least two driving and steering wheels pertaining to a same axle, each wheel being actuated by a hydraulic motor arranged with said wheel, and each wheel being articulated with respect to the frame around a steering axis;
- a hydraulic circuit capable of carrying a fluid under pressure to actuate the hydraulic motors, said hydraulic circuit comprising a static part which is mounted on the vehicle frame and which is hydraulically connected to each of said hydraulic motors by means of at least two main lines;
and is further characterized in that each main line comprises:
- a first rigid pipe extending from the static part and having an opposite free end portion;
- a second rigid pipe extending from a port of the corresponding hydraulic motor and having an opposite free end portion;
- a flexible hose connecting the free end portions of the first and second rigid pipes;
said two free end portions of the first and second rigid pipes of a same main line being oriented substantially in a same operating plane which is substantially horizontal and perpendicular to the steering axis, such that, when said wheels are steered between the extreme left and right steering positions, the flexible hose of each main line is deflected while remaining substantially in said operating plane.

Another way of presenting the invention is that, when connected to the first and second rigid pipes, the flexible hose of a main line extends substantially in a plane which is perpendicular to the steering axis of the corresponding wheel.

In practice, the steering axis is most often not perfectly vertical, i.e. not perfectly perpendicular to a flat horizontal surface on which the vehicle is rolling, but may exhibit a caster and a camber angle, both of which are in most cases inferior to 10 degrees. Therefore, in the majority of the cases, due to these small angle values, the steering axis will appear to be vertical and the operating plane in which the flexible hose should extend will be almost horizontal.

Thus, in a hydraulic circuit according to the invention, each flexible hose can be bent around one or more vertical axes, and can for example follow a rounded curve or a substantially S shape, depending on the steering angle of the wheels. However, the flexible hose is not, or almost not, twisted around its axis, including at the connecting area between said hose and one of the rigid pipes. Such hoses generally admit a torsion of around 5-10° which is higher than the maximal torsion of the flexible hoses in an arrangement according to the invention.

As a consequence, the flexible hoses undergo fewer stresses which are critical to their mechanical strength and which are liable to wear them prematurely. Because of this, their service life is greatly increased, as well as the safety of the overall hydraulic circuit.

It has to be noted that, in addition to the above mentioned factor that the steering axis is most often not exactly vertical, the operating plane can be slightly tilted and/or deformed due to the ground unevenness and because of the suspension system. However, the amplitude of such a movement or a deformation of the operating plane is low. Thus, the corresponding deformation of the flexible hoses is low as compared with the deformation of the flexible hoses of the prior art circuit arrangements.

Because the path of the flexible hoses is partly imposed by the rigid pipes, said hoses move within a smaller space when the wheels are steered, and therefore are less liable to come in contact with mechanical parts which can wear them down. This further increases the flexible hoses service life.

Another advantage of the invention is that, since the flexible hoses are less deformed than in the prior art, for example their maximum curvature being divided by two, there can be implemented another type of flexible hoses having properties which better suit the operating conditions. Thus, there can be used flexible hoses whose maximum admissible curvature is lower but which better withstand high pressures. As a result, it is possible to use the hydraulic circuit at its full capacity in terms of pressure, which can be as high as 420 bar. Therefore, a great steering amplitude of the wheels can be obtained. Such flexible hoses generally have a lower external diameter than in the prior art, which results in a more compact and less heavy overall hydraulic circuit.

Furthermore, the use of rigid pipes as part of the main lines makes it possible to industrialize part of the assembly process of the hydraulic circuit. For example, the hydraulic distribution block can be prepared in advance by equipping it with the first rigid pipes.

Preferably, said operating plane is located above the vehicle frame. With this arrangement, the steering of the wheels is not hampered by the flexible hoses, and therefore, a higher steering angle can be obtained.

Preferably, the free end portions of the first and second rigid pipes of one main line connected to one wheel and the free end portions of the first and second rigid pipes of the other main line connected to the same wheel define two operating planes which are distinct and substantially parallel. This ensures that a flexible hose can move without hampering the movement of the other flexible hose when the wheels are steered.

In an implementation of the invention, the static part of the hydraulic circuit has a hydraulic distribution block which is located above the vehicle frame, at a distance from the axle of said driving and steering wheels, and, for at least one main line, the first rigid pipe has a first portion extending from the hydraulic distribution block substantially transversely and a second portion which forms the free end portion of said pipe and which is oriented substantially horizontally and directed towards the corresponding wheel.

In concrete terms, the path of the first portion of the rigid pipe is not critical for the controlled deformation of the corresponding flexible hose. Therefore, the path of the first portion of the rigid pipe can be adapted to the surrounding area of the hydraulic distribution block and to the operating conditions, whereas the free end portion of said rigid pipe must be in a plane according to the invention.

The hydraulic distribution block is for example located close to the vehicle frame, and substantially in the median longitudinal plane of the vehicle. Thus, the first rigid pipes can be arranged substantially symmetrically with respect to said median longitudinal plane.

If the driving and steering wheels are the front wheels, then the hydraulic distribution block is preferably located rearwards from said axle, and the free end portion may be directed forwards. Said free end portion is typically substantially straight and is running on from the free end of the first portion.

Each second rigid pipe can have a first portion extending from the corresponding port of the hydraulic motor towards said operating plane and a second portion which forms the free end portion of said pipe and which is oriented substantially perpendicularly to the steering axis of the corresponding wheel. The free end portion may be directed towards the free end portion of the corresponding first rigid pipe.

Similarly with the first rigid pipe, the path of the first portion of the second rigid pipe is not critical for the controlled deformation of the corresponding flexible hose. Therefore, the path of the first portion of the second rigid pipe can be adapted to the surrounding area of the wheel and to the operating conditions, whereas the free end portion must be in a plane according to the invention,

If the driving and steering wheels are the front wheels, then the free end portion is preferably directed rearwards. Said free end portion is typically substantially straight and is running on from the free end of the first portion.

According to an embodiment of the invention, said port of the hydraulic motor is located on a lower part of the hydraulic motor, the first portion of the second rigid pipe being bent and including a part extending downwards from the hydraulic motor and a part extending substantially vertically towards the free end portion of said pipe.

The hydraulic circuit can comprise at least one drain line connecting each hydraulic motor to the static part of the hydraulic circuit, said drain line being flexible and being attached to at least one of the main lines connected to the same hydraulic motor. Such a drain line carries a fluid with a relatively low pressure and therefore can consist of a flexible hose. By attaching the drain line to a main line, the path of the drain line is also controlled and optimized in terms of deformation and stresses.

The hydraulic circuit comprises a pump capable of pressurizing and moving the fluid, said pump being preferably a variable displacement pump and being directly actuated by the vehicle engine without any clutch mechanism. In other words, the pump is actuated by the engine all the time, and therefore always delivers a fluid flow.

Preferably, the hydraulic circuit further comprises a valve block which is arranged to make the fluid delivered by the pump move in a closed loop not including the hydraulic motors, and which can be controlled to direct the fluid towards the hydraulic motors. Typically, the valve can be remotely controlled by the vehicle driver, for example though an electronic control module, when needed.

These and other features and advantages will become apparent upon reading the following description in view of the drawing attached hereto representing, as non-limiting examples, embodiments of a vehicle according to the invention.

### Brief description of the drawings

The following detailed description of several embodiments of the invention is better understood when read in conjunction with the appended drawings being understood, however, that the invention is not limited to the specific embodiments disclosed.
Figure 1 is a perspective view of a vehicle according the invention, showing the hydraulic circuit;
Figure 2 is a schematic representation of said hydraulic circuit;
Figure 3 is a top view of the front part of the vehicle of figure 1;
Figure 4 is a side view of the front part of the vehicle of figure 1;
Figure 5 is a detailed view of the hydraulic circuit showing the hydraulic distribution block and the first rigid pipes;
Figure 6 is a perspective view of the driving and steering wheels of the vehicle, showing one hydraulic motor and the second rigid pipes;
Figure 7 is a detailed perspective view of the right wheel, without the tyre, showing two main lines between the hydraulic motor and the hydraulic distribution block, as well as two drain lines;
Figure 8 shows in detail a possible deformation of the flexible hoses of two main lines;
Figure 9 is a perspective view of the right wheel when steered at its maximum steering angle towards the left, and showing the corresponding deformation of the flexible hoses;
Figure 10 is a perspective view of the right wheel when steered at its maximum steering angle towards the right, and showing the corresponding deformation of the flexible hoses.

### Detailed description of the invention

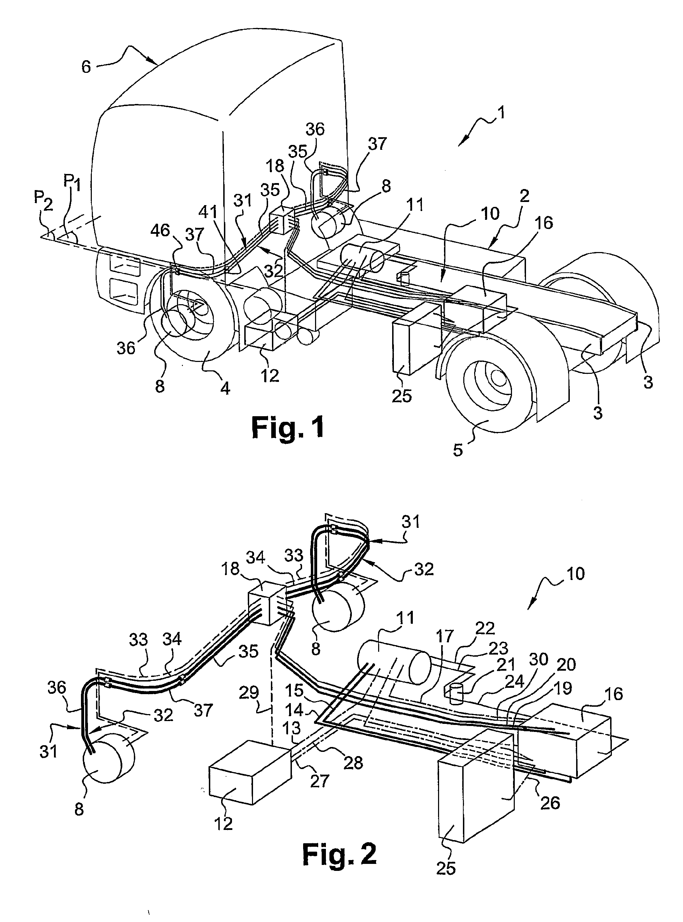

As this is illustrated in Figure 1, a vehicle 1 comprises a frame 2, which may for example include two longitudinal girders 3 connected by a number or cross-members, and which is supported by a front axle comprising two front wheels 4 and a rear axle comprising two rear wheels 5. In the shown example, the axles are of the rigid type, where the two wheels are connected by a rigid axle beam 7, but could be of another type. The axles could for example be of the semi-rigid type, or could be formed of independent wheels. The axles are conventionally suspended so as to allow a substantially vertical movement of the wheels with respect to the frame between a low position of the wheel and a high position of the wheel with respect to the frame. The vehicle 1 further comprises a cab 6.

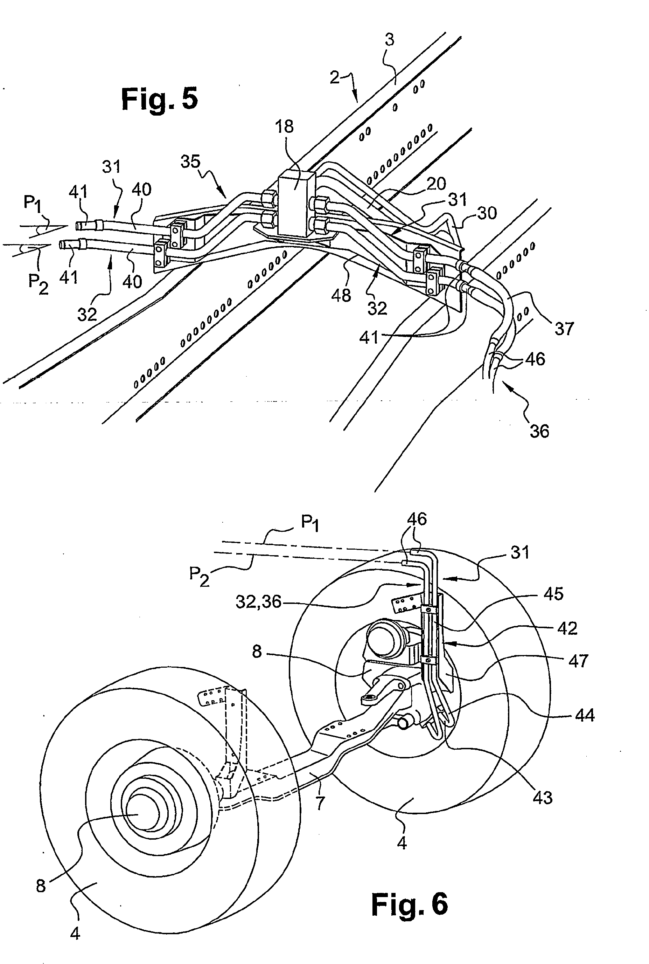

The two front wheels 4 are driving and steering wheels. As such, in a well known manner, each wheel is mounted on a wheel hub which can rotate around a substantially horizontal axis with respect to a steering knuckle. The steering knuckle can rotate with respect to the axle beam 7, under the action of a steering mechanism, around a steering axis which is substantially vertical, but which may exhibit a caster and/or a camber angle as well known to the man in the art. As can be seen from Figure 6, the driving and steering wheels are located at the ends of a same axle and are each associated with a hydraulic motor 8. As known in the art, each motor 8 has a stator, which is fixed on the steering knuckle, and a rotor, which forms or supports the wheel hub to which a wheel can be attached. Preferably, the motor is contained within the internal volume defined by the wheel rim. The wheels 4 can be driven by means of said hydraulic motors 8 which are supplied with a fluid under pressure flowing in a hydraulic circuit 10. On the other hand, the hydraulic motors follow the movements of the wheels with respect to the frame, both when they are steered and when they are deflected up or drown due to of the axle suspensions.

The hydraulic circuit 10, as illustrated in Figures 1 and 2, can be divided between a static part, connected to the frame, and a mobile part, connected to the wheels. The mobile part consists essentially of the hydraulic motors. The static part of the hydraulic circuit comprises a pump 11 which can be directly actuated by the vehicle engine - i.e. without any clutch mechanism - and which is preferably a variable displacement pump. Said pump 11 is designed to suck the fluid from a tank 12 by a suction line 13 and is capable of delivering the fluid under a maximum pressure of 420 bar, which can be used in particular when starting the vehicle 1, and under an average operating pressure of around 200 bar.

The high pressure fluid then flows in lines 14, 15 towards a hydraulic valve block 16 which controls the fluid flow in the hydraulic circuit 10.

The valve block 16 can make the fluid delivered by the pump 11 flow back to said pump 11 via line 17. Thus, the fluid moves in a closed loop and does not flow to the hydraulic motors 8, and therefore does not actuate them.

The valve block 16 can also be controlled by the vehicle driver and/or by an electronic system to direct the high pressure fluid towards a hydraulic distribution block 18 via lines 19, 20.

In the embodiment illustrated in the Figures, the hydraulic distribution block 18 is located above the vehicle frame 2, substantially in the median longitudinal plane of the vehicle 1. Moreover, said hydraulic distribution block 18 is located rearwards from the axle 7 of the driving and steering wheels 4, for example close to the rear wall of the cab 6, on a transverse beam or cross-member 48 (see Figure 5). In the shown example, the hydraulic distribution block is a mere passive flow divider which divides the flow coming from the valve block 16 in two equal parts for each of the hydraulic motors. Alternatively, the hydraulic block could be an active component, for example a controlled flow divider regulating the amount of flow sent to each motor, thereby acting as an active differential. In any case the hydraulic circuit could exhibit a single hydraulic block combining the functions of the valve block 16 and of the distribution block 18.

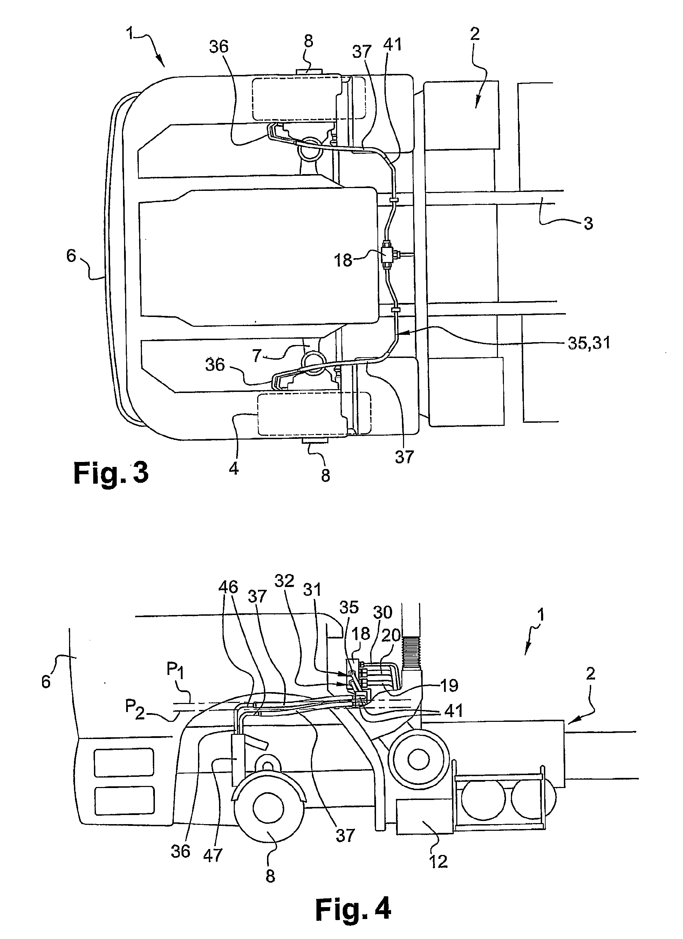

The rear parts of said lines 19, 20, which are close to the valve block 16, can consist of flexible hoses, whereas the front parts of said lines 19, 20, which are close to the hydraulic distribution block 18, are preferably made of rigid pipes, as better shown in Figure 4 and 5. By making the parts of lines 19, 20 which are connected to the hydraulic distribution block 18 as rigid pipes, the industrialization of the hydraulic circuit 10 is made easier.

The hydraulic circuit 10 may further comprise a filtering loop which carries the fluid from the pump 11 to a filter 21 via a line 22 and then back to the pump 11 via a line 23. A dedicated drain line 24 is also provided to carry any excess fluid from the filter 21 to the valve block 16.

The hydraulic circuit 10 may further comprise a cooling loop including a fan 25. The fluid is carried from the pump 11 towards the fan 25 via line 26, and then back to the tank 12 via line 27. A combined cooling and filtering loop could be provided.

Other drain lines are also provided: a drain line 28 extending from the valve block 16 towards the tank 12; a drain line 29 extending from the hydraulic distribution block 18 towards the tank 12; a drain line 30 extending from the hydraulic distribution block 18 towards the valve block 16.

All the above mentioned elements of the hydraulic circuit, except for the hydraulic motors 8, can be considered as belonging to the static part of the circuit as they do not substantially move with respect to the frame.

When needed, the high pressure fluid delivered by the pump 11 and flowing from the valve block 16 in lines 19, 20 enters the hydraulic distribution block 18 and is directed towards the hydraulic motor 8 of each of the front wheels 4 by two main lines 31, 32.

On each side of the vehicle 1, a first main line 31 is used as a supply line for moving the vehicle 1 forwards, the second main line 32 then being the return line towards the hydraulic distribution block 18. Conversely, the second main line 32 is used as a supply line for moving the vehicle 1 backwards, the first main line 31 being the return line. Furthermore, on each side of the vehicle 1 are provided two drain lines 33, 34 between the hydraulic motor 8 and the hydraulic distribution block 18, each of said drain lines 33, 34 being dedicated to one main line 31, 32.

Each main line 31, 32 comprises a first rigid pipe 35 extending from a port of the hydraulic distribution block 18, a second rigid pipe 36 extending from a port of the corresponding hydraulic motor 8, and a flexible hose 37 connecting the first and second rigid pipes 35, 36. The port of the hydraulic motor 8 can for example be fitted directly on the motor's stator or to any part being in a fixed relationship therewith, such as the steering knuckle, with then the possibility of a further communication channel between the motor and the port.

In the embodiment shown in the Figures, the part of the hydraulic circuit 10 including the hydraulic distribution block 18, the hydraulic motors 8 and the connecting lines between them is substantially symmetrical with respect to the median longitudinal plane of the vehicle 1.

As shown in Figures 3 to 5, the first rigid pipe 35 has a first portion 40 which extends from the hydraulic distribution block 18 substantially transversely and also slightly downwards, followed by a second portion 41 which forms the free end portion of said pipe 35. The second portion 41 defines a first axis, which can be its own axis if the end portion is tubular, but which is more precisely the orientation that this rigid end portion will define for the connecting portions of the flexible hose. For example, the second portion 41 can be oriented somewhat forwards, towards the corresponding wheel 4.

As shown in Figures 4 and 6, the second rigid pipe 36 has a first portion 42 extending from the corresponding port of the hydraulic motor 8, which is for example located on a lower front part of the hydraulic motor 8. Said first portion 42 is bent and includes a part 43 extending downwards and forward from the hydraulic motor 8, followed by an intermediate part 44 extending upwards and rearward, and then a part 45 extending substantially vertically up. The vertical parts 45 of both rigid pipes 36 of a same wheel 4 can be housed and maintained in a support 47 fastened onto the hydraulic motor's stator and/or on the steering knuckle.

The second rigid pipe 36 further comprises a second portion 46 which forms the free end portion of said pipe. The second portion 46 of each pipe has an orientation, defined by its axis or by the axis of the flexible hose portion which is connected to it. According to the invention, this axis of the second portion 46 of the second rigid pipe 36, and the axis of the second portion 41 of the first rigid pipe 35 are arranged so as to define an operating plane P1 (for the first main line 31), P2 (for the second main line 32). Because of its flexibility, the hose 37 will naturally tend, when connected to both end portions, to adopt a shape which lies within the corresponding operating plane, rather than extending along a three-dimensional path as if the end portions has any orientation one with respect to the other. In theory the axis of the two end portions need to intersect each other.

Preferably, the operating plane is perpendicular or at least substantially perpendicular to the steering axis, meaning that both end portions are oriented substantially perpendicularly to the steering axis of the wheel. As a consequence, the orientation of these end portions remain in the same operating plane whatever the steering position of the wheel, and the flexible hose will thus deform itself within said plane, without enduring any substantial twisting around its own axis.

In the example, the second portion 46 is directed rearwards, somewhat towards the second portion 41 of the corresponding first rigid pipe 35.

On each side of the vehicle 1, the second portions 41, 46 of the first and second rigid pipes 35, 36 of the first main line 31 are located in a first operating plane P1, and the second portions 41, 46 of the first and second rigid pipes 35, 36 of the second main line 32 are located in a second operating plane P2. Planes P1 and P2 are distinct and substantially parallel (see in particular Figure 4). Both planes P1, P2 are vertically offset and are preferably located above the frame 2, more particularly above the girders 3.

As the steering axis of each wheel is substantially vertical (with the approximation due to the camber and caster angles) the operating planes P1 and P2 are substantially horizontal.

As a result, the flexible hose 37 of a main line 31 or 32 is also substantially located in a same horizontal operating plane P1 or P2.

As can be seen from Figure 4, where the wheel is shown in its lowermost position compared to the frame, which occurs only when said wheel does not touch the ground, the second portion 46 of the second rigid pipe 36 and the second portion 41 of the first rigid pipe 35 can be slightly vertically offset, and therefore not exactly being located in a same horizontal plane. However, said difference in height is very low and is liable to vary because of the suspension system when the vehicle 1 is in motion. A similar situation occurs when the wheel is in its uppermost position compared to the frame, which occurs only when the vehicle encounters extreme obstacles on the ground.

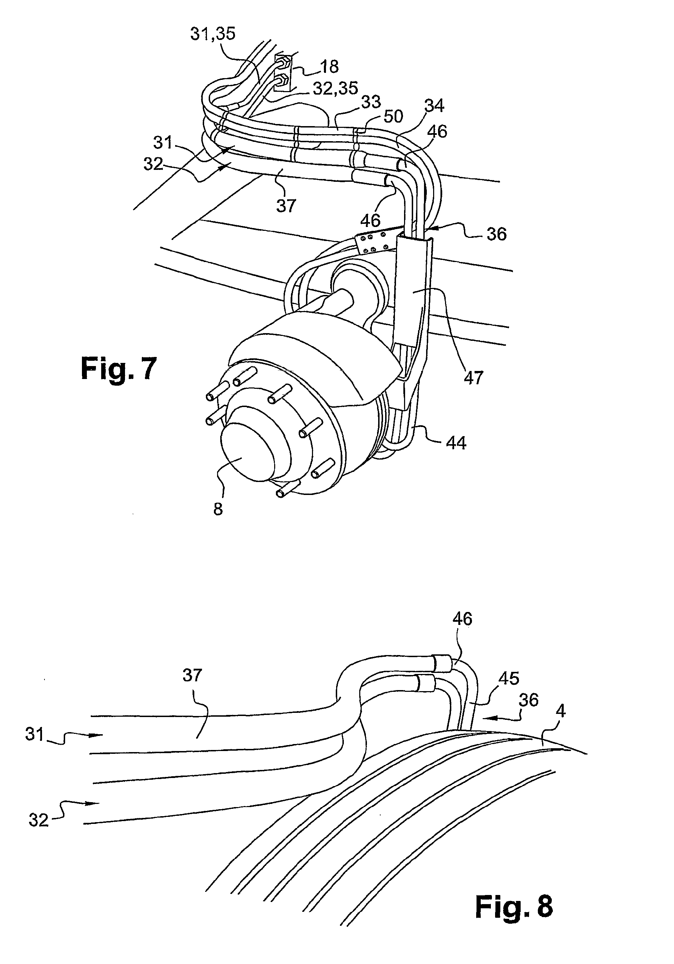

According to the steering angle, the flexible hose 37 can be curved as a C (see Figure 7) or have an S shape presenting a point of inflexion (see Figure 8).

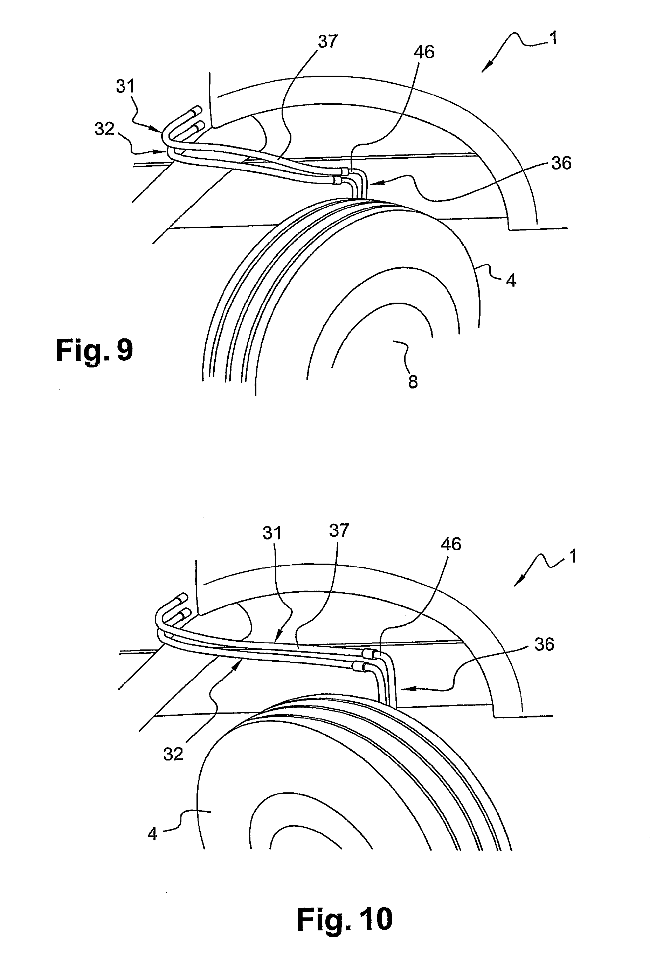

One can appreciate that even in the extreme right steering position (Figure 9) or in the extreme left steering position (Figure 10), the deformation of the flexible hose 37 remains in an acceptable range, especially regarding torsion, and said hose 37 substantially remains in the operating plane P1 or P2.

As can be seen in Figure 7, the drain lines 33, 34 which connect each hydraulic motor 8 to the hydraulic distribution block 18 are flexible and are attached to the flexible hose 37 of one main line 31, 32, typically by means of collars 50. This arrangement is advantageous, because since said drain lines 33, 34 carry a fluid having a low pressure (generally in the range of about 10-30 bar), they can be made of a standard flexible which is widely used and not expensive. But at the same time, by attaching said flexible drain lines 33, 34 to a flexible hose 37 whose deformation is controlled thanks to the dispositions of the invention, the path and therefore the deformation of the flexible drain lines 33, 34 are also controlled.

More generally, the drain lines 24, 28, 29, 30 can be flexible since the fluid flowing in said lines has a low pressure.

However, the portions of the lines that are entering or going out of the hydraulic distribution block 18 are preferably made of rigid pipes, whether they carry high pressure fluid or low pressure fluid (drain lines). As illustrated in Figures 2 and 5, these lines include the four first rigid pipes 35 of the main lines 31, 32, the lines 19, 20 connected to the valve block 16, and the drain line 30 also connected to the valve block 16.

As a result, the hydraulic distribution block 18 and most of the lines connected to it form a rigid element whose assembly process can more easily be industrialized, and which can later be mounted more quickly onto the vehicle frame 2.

Of course, the invention is not restricted to the embodiment described above by way of non-limiting example, but on the contrary it encompasses all embodiments thereof.

## Claims

1. A vehicle having:
- a frame (2);
- at least two driving and steering wheels (4) pertaining to a same axle (7), each wheel (4) being actuated by a hydraulic motor (8) arranged with said wheel and each wheel being articulated with respect to the frame around a steering axis;
- a hydraulic circuit (10) capable of carrying a fluid under pressure to actuate the hydraulic motors (8), said hydraulic circuit (10) comprising a static part (18) which is mounted on the vehicle frame (2) and which is hydraulically connected to each of said hydraulic motors (8) by means of at least two main lines (31, 32);
**characterized in that** each main line comprises:
- a first rigid pipe (35) extending from the static part (18) and having an opposite free end portion (41);
- a second rigid pipe (36) extending from a port of the corresponding hydraulic motor (8) and having an opposite free end portion (46);
- a flexible hose (37) connecting the free end portions (41, 46) of the first and second rigid pipes (35, 36);
said two free end portions (41, 46) of the first and second rigid pipes (35, 36) of a same main line (31, 32) being oriented substantially in a same operating plane (P1, P2) which is substantially horizontal and perpendicular to the steering axis, such that, when said wheels (4) are steered between the extreme left and right steering positions, the flexible hose (37) of each main line is deflected while remaining substantially in said operating plane (P1, P2).

2. The vehicle according to claim 1, **characterized in that** said operating plane (P1, P2) is located above the vehicle frame (2).

3. The vehicle according to any one of claims 1 or 2, **characterized in that** the free end portions (41, 46) of the first and second rigid pipes (35, 36) of one main line (31) connected to one wheel (4) and the free end portions (41, 46) of the first and second rigid pipes (35, 36) of the other main line (32) connected to the same wheel (4) define two operating planes (P1, P2) which are distinct and substantially parallel.

4. The vehicle according to any one of claims 1 to 3, **characterized in that** the static part of the hydraulic circuit (10) comprises a hydraulic distribution block (18) which is located above the vehicle frame (2), at a distance from the axle (7) of said driving and steering wheels (4), and **in that**, for at least one main line (31, 32), the first rigid pipe (35) has a first portion (40) extending from the hydraulic distribution block (18) substantially transversely and a second portion (41) which forms the free end portion of said pipe (35) and which is oriented substantially horizontally and directed towards the corresponding wheel (4).

5. The vehicle according to any one of claims 1 to 4, **characterized in that** each second rigid pipe (36) has a first portion (42) extending from the corresponding port of the hydraulic motor (8) towards said operating plane (P1, P2) and a second portion (46) which forms the free end portion of said pipe (36) and which is oriented substantially perpendicularly to the steering axis of the corresponding wheel.

6. The vehicle according to claim 5, **characterized in that** said port of the hydraulic motor (8) is located on a lower part of the hydraulic motor (8), the first portion (42) of the second rigid pipe (36) being bent and including a part (43) extending downwards from the hydraulic motor (8) and a part (45) extending substantially vertically towards the free end portion (46) of said pipe (36).

7. The vehicle according to any one of claims 1 to 6, **characterized in that** the hydraulic circuit (10) comprises at least one drain line (33, 34) connecting each hydraulic motor (8) to the static part of the hydraulic circuit (10), said drain line (33, 34) being flexible and being attached to at least one of the main lines (31, 32) connected to the same hydraulic motor (8).

8. The vehicle according to any one of claims 1 to 7, **characterized in that** the hydraulic circuit (10) comprises a pump (11) capable of moving the fluid, said pump (11) being a variable displacement pump and being directly actuated by the vehicle engine without any clutch mechanism.

9. The vehicle according to claim 8, **characterized in that** the hydraulic circuit (10) further comprises a valve (16) which is arranged to make the fluid delivered by the pump (11) move in a closed loop not including the hydraulic motors (8), and which can be controlled to direct the fluid towards the hydraulic motors (8).

## Patentansprüche

1. Fahrzeug mit
- einem Rahmen (2),
- wenigstens zwei Antriebs- und Lenkrädern (4), die zu einer gleichen Achse (7) gehören, wobei jedes Rad (4) durch einen Hydraulikmotor (8) betätigt wird, der an dem Rad angeordnet ist, und jedes Rad bezüglich des Rahmens um eine Lenkachse verschwenkt wird,
- einem Hydraulikkreis (10), der ein Fluid unter Druck führen kann, um die Hydraulikmotoren (8) zu betätigen, wobei der Hydraulikkreis (10) einen statischen Teil (18) umfasst, der an dem Fahrzeugrahmen (2) angebracht ist und der hydraulisch mit jedem der Hydraulikmotoren (8) mittels wenigstens zweier Hauptleitungen (31, 32) verbunden ist,
**dadurch gekennzeichnet, dass** jede Hauptleitung umfasst:
- ein erstes steifes Rohr (35), das sich von dem statischen Teil (18) erstreckt und einen entgegengesetzten freien Endabschnitt (41) aufweist,
- ein zweites steifes Rohr (36), das sich von einem Kanal des entsprechenden Hydraulikmotors (8) erstreckt und einen entgegengesetzten freien Endabschnitt (46) aufweist,
- einen flexiblen Schlauch (37), der die freien Endabschnitte (41, 46) des ersten und zweiten steifen Rohres (35, 36) verbindet,
wobei die zwei freien Endabschnitte (41, 46) des ersten und zweiten steifen Rohres (35, 36) derselben Hauptleitung (31, 32) in derselben Funktionsebene (P1, P2) ausgerichtet sind, die im Wesentlichen horizontal und senkrecht zu der Lenkachse verläuft, so dass, wenn die Räder (4) zwischen der extrem linken und rechten Lenkposition bewegt werden, der flexible Schlauch (37) jeder Hauptleitung gebogen wird, wobei er im Wesentlichen in der Funktionsebene (P1, P2) verbleibt.

2. Fahrzeug nach Anspruch 1, **dadurch gekennzeichnet, dass** die Funktionsebene (P1, P2) oberhalb des Fahrzeugrahmens (2) angeordnet ist.

3. Fahrzeug nach irgendeinem der Ansprüche 1 oder 2, **dadurch gekennzeichnet, dass** die freien Endabschnitte (41, 46) des ersten und zweiten steifen Rohrs (35, 36) einer mit einem Rad (4) verbundenen Hauptleitung (31) und die freien Endabschnitte (41, 46) des ersten und zweiten steifen Rohrs (35, 36) der anderen Hauptleitung (32), die mit demselben Rad (4) verbunden ist, zwei Funktionsebenen (P1, P2) bilden, die voneinander unterschiedlich und im Wesentlichen parallel sind.

4. Fahrzeug nach irgendeinem der Ansprüche 1 bis 3, **dadurch gekennzeichnet, dass** der statische Teil des Hydraulikkreises (10) einen Hydraulikverteilungsblock (18) umfasst, der oberhalb des Fahrzeugrahmens (2) in einem Abstand von der Achse (7) der Antriebs- und Lenkräder (4) angeordnet ist, und dass bei wenigstens einer Hauptleitung (31, 32) das erste steife Rohr (35) einen ersten Abschnitt (40), der sich von dem Hydraulikverteilungsblock (18) im Wesentlichen quer erstreckt, und einen zweiten Abschnitt (41) aufweist, der den freien Endabschnitt des Rohrs (35) bildet und der im Wesentlichen horizontal ausgerichtet und in Richtung des entsprechenden Rades (4) gerichtet ist.

5. Fahrzeug nach irgendeinem der Ansprüche 1 bis 4, **dadurch gekennzeichnet, dass** jedes zweite steife Rohr (36) einen ersten Abschnitt (42), der sich von dem entsprechenden Kanal des Hydraulikmotors (8) in Richtung der Funktionsebene (P1, P2) erstreckt, und einen zweiten Abschnitt (46) aufweist, der den freien Endabschnitt des Rohrs (36) bildet und der im Wesentlichen senkrecht zu der Lenkachse des entsprechenden Rads ausgerichtet ist.

6. Fahrzeug nach Anspruch 5, **dadurch gekennzeichnet, dass** der Kanal des Hydraulikmotors (8) an einem unteren Teil des Hydraulikmotors (8) angeordnet ist, wobei der erste Abschnitt (42) des zweiten steifen Rohrs (36) gebogen ist und einen Teil (43), der sich von dem Hydraulikmotor (8) nach unten erstreckt, und einen Teil (45) aufweist, der sich im Wesentlichen vertikal in Richtung des freien Endabschnitts (46) des Rohrs (36) erstreckt.

7. Fahrzeug nach irgendeinem der Ansprüche 1 bis 6, **dadurch gekennzeichnet, dass** der Hydraulikkreis (10) wenigstens eine Ablassleitung (33, 34) umfasst, die jeden Hydraulikmotor (8) des statischen Teils des Hydraulikkreises (10) verbindet, wobei die Ablassleitung (33, 34) flexibel ist und an wenigstens einer der Hauptleitungen (31, 32) angebracht ist, die an den gleichen Hydraulikmotor (8) angeschlossen ist.

8. Fahrzeug nach irgendeinem der Ansprüche 1 bis 7, **dadurch gekennzeichnet, dass** der Hydraulikkreis (10) eine Pumpe (11) umfasst, die das Fluid bewegen kann, wobei die Pumpe (11) eine variable Verdrängungspumpe ist und direkt durch den Fahrzeugmotor ohne irgendeinen Kupplungsmechanismus betätigt wird.

9. Fahrzeug nach Anspruch 8, **dadurch gekennzeichnet, dass** der Hydraulikkreis (10) außerdem ein Ventil (16) umfasst, das so ausgebildet ist, dass es dafür sorgt, dass das von der Pumpe (11) geförderte Fluid sich in einer geschlossenen Schleife bewegt, die nicht die Hydraulikmotoren (8) einschließt, und das zur Richtung des Fluids in Richtung der Hydraulikmotoren (8) gesteuert werden kann.

## Revendications

1. Véhicule ayant :
un châssis (2);
au moins deux roues motrices et directrices (4) appartenant à un même essieu (7), chaque roue (4) étant actionnée par un moteur hydraulique (8) agencé avec ladite roue et chaque roue étant articulée par rapport au châssis autour d'un axe de direction ;
- un circuit hydraulique (10) capable de transporter un fluide sous pression pour actionner les moteurs hydrauliques (8), ledit circuit hydraulique (10) comprenant une partie statique (18) fixée sur le châssis de véhicule (2) et reliée sur le plan hydraulique à chacun desdits moteurs hydrauliques (8) au moyen d'au moins deux conduites principales (31, 32) ;
**caractérisé en ce que** chaque conduite principale comprend :
- un premier tuyau rigide (35) s'étendant hors de la partie statique (18) et ayant une partie d'extrémité libre (41) opposée ;
- un second tuyau rigide (36) s'étendant hors d'une borne du moteur hydraulique (8) correspondant et ayant une partie d'extrémité libre (46) opposée ;
- un tuyau flexible (37) reliant les parties d'extrémité libre (41, 46) des premier et second tuyaux rigides (35, 36) ;
lesdites deux parties d'extrémité libre (41, 46) des premier et second tuyaux rigides (35, 36) d'une même conduite principale (31, 32) étant pour l'essentiel orientées dans un même plan fonctionnel (P1, P2) sensiblement horizontal et perpendiculaire à l'axe de direction, de telle sorte que lorsque lesdites roues (4) sont dirigées entre les positions de direction d'extrême gauche et droite, le tuyau flexible (37) de chaque conduite principale est dévié tout en restant sensiblement dans ledit plan fonctionnel (P1, P2).

2. Véhicule selon la revendication 1, **caractérisé en ce que** ledit plan fonctionnel (P1, P2) est positionné au-dessus du châssis de véhicule (2).

3. Véhicule selon l'une quelconque des revendications 1 ou 2, **caractérisé en ce que** les parties d'extrémité libre (41, 46) des premier et second tuyaux rigides (35, 36) d'une conduite principale (31) reliée à une roue (4) et les parties d'extrémité libre (41, 46) des premier et second tuyaux rigides (35, 36) de l'autre conduite principale (32) reliée à la même roue (4) définissent deux plans fonctionnels (P1, P2) distincts et sensiblement parallèles.

4. Véhicule selon l'une quelconque des revendications 1 à 3, **caractérisé en ce que** la partie statique du circuit hydraulique (10) comprend un bloc de distribution hydraulique (18) positionné au-dessus du châssis de véhicule (2), à une certaine distance de l'essieu (7) desdites roues motrices et directrices (4), et **en ce que**, pour au moins une conduite principale (31, 32), le premier tuyau rigide (35) a une première partie (40) s'étendant hors du bloc de distribution hydraulique (18) sensiblement transversalement et une seconde partie (41) formant la partie d'extrémité libre dudit tuyau (35) orientée sensiblement horizontalement et dirigée en direction de la roue (4) correspondante.

5. Véhicule selon l'une quelconque des revendications 1 à 4, **caractérisé en ce que** chaque second tuyau rigide (36) a une première partie (42) s'étendant hors de la borne correspondante du moteur hydraulique (8) en direction dudit plan fonctionnel (P1, P2) et une seconde partie (46) formant la partie d'extrémité libre dudit tuyau (36) et orientée sensiblement perpendiculairement à l'axe de direction de la roue correspondante.

6. Véhicule selon la revendication 5, **caractérisé en ce que** ladite borne du moteur hydraulique (8) est positionnée sur une partie inférieure du moteur hydraulique (8), la première partie (42) du second tuyau rigide (36) étant incurvée et comprenant une partie (43) s'étendant vers le bas en partant du moteur hydraulique (8) et une partie (45) s'étendant sensiblement verticalement en direction de la partie d'extrémité libre (46) dudit tuyau (36).

7. Véhicule selon l'une quelconque des revendications 1 à 6, **caractérisé en ce que** le circuit hydraulique (10) comprend au moins une conduite de vidange (33, 34) reliant chaque moteur hydraulique (8) à la partie statique du circuit hydraulique (10), ladite conduite de vidange (33, 34) étant flexible et fixée à au moins une des conduites principales (31, 32) reliées au même moteur hydraulique (8).

8. Véhicule selon l'une quelconque des revendications 1 à 7, **caractérisé en ce que** le circuit hydraulique (10) comprend une pompe (11) capable de déplacer le fluide, ladite pompe (11) étant une pompe à déplacement variable et étant directement actionnée par le moteur du véhicule sans aucun mécanisme d'embrayage.

9. Véhicule selon la revendication 8, **caractérisé en ce que** le circuit hydraulique (10) comprend en outre une soupape (16) agencée pour faire se déplacer le fluide amené par la pompe (11) dans une boucle fermée ne comprenant pas les moteurs hydrauliques (8) et pouvant être commandée pour diriger le fluide en direction des moteurs hydrauliques (8).
